# EUROPÄISCHE PATENTANMELDUNG

(11) **EP 1 563 973 A1**
(43) Veröffentlichungstag der Anmeldung: **17.08.2005**
(21) Anmeldenummer: 05002079.1
(22) Anmeldetag: 02.02.2005
(51) Int. Cl.: B29B 9/10, B29B 9/12, C08J 3/12

(54) **Festes pulverförmiges Polyethylenglykol mit bimodaler Korngrössenverteilung, dessen Herstellung und ihre Verwendung**

(30) Priorität: 11.02.2004 DE 102004006670
(71) Anmelder: Clariant GmbH, 65929 Frankfurt am Main (DE)
(72) Erfinder: Henning, Torsten, 65812 Bad Soden (DE); Borchers, Georg, Dr., 61231 Bad Nauheim (DE)
(74) Vertreter: Paczkowski, Marcus, Dr.

(57) **Zusammenfassung**

Beansprucht wird ein festes Polyethylenglykol mit mittlerer Molmasse von 1500 bis 40000 in Pulverform mit einer bimodalen Korngrößenverteilung, mit 0 bis 15 Gew.-% Teilchen kleiner 100 Mikrometer, 10 bis 90 Gew.-% Teilchen zwischen 100 und 200 Mikrometer, 0 bis 25 Gew.-% Teilchen zwischen 200 und 300 Mikrometer, 10 bis 90 Gew.- % Teilchen zwischen 300 und 1000 Mikrometer und 0 bis 10 Gew.-% Teilchen größer als 1000 Mikrometer.

## Beschreibung

Festes pulverförmiges Polyethylenglykol mit bimodaler Korngrößenverteilung, dessen Herstellung und dessen Verwendung

Die Erfindung betrifft ein bei Raumtemperatur festes pulverförmiges Polyethylenglykol mit einer bimodalen Korngrößenverteilung; dessen Herstellung sowie dessen Verwendung als Hilfsmittel bei der Tablettenherstellung und/oder Schmelzgranulierung.

Polyethylenglykol (Abkürzung PEG) mit der allgemeinen Formel H(OCH₂CH₂)ₙOH ist ab etwa n gleich 32, entsprechend einer mittleren Molmasse von etwa 1500, fest genug, um in pulverförmige Form gebracht werden zu können.
Es wird aufgrund der interessanten Eigenschaften in einer Vielzahl von Anwendungsgebieten eingesetzt. Ein wichtiges Anwendungsgebiet bei Raumtemperatur fester pulverförmiger PEGs mit mittlerer Molmasse ab etwa 1500, bevorzugt von 3000 bis 20000, besonders bevorzugt von 3350 bis 8000, ist die Verwendung als Hilfsmittel bei der Tablettenherstellung. Das PEG kann dabei ganz unterschiedliche Funktionen übernehmen, je nach Verfahren. PEG wirkt beispielsweise als Schmiermittel und Bindemittel. Je nach gewählter Molmasse kann der Schmelzpunkt so niedrig sein, dass das PEG unter dem Pressdruck schmilzt und so genannte Sintertechnik oder Kompressionstechnik ermöglicht. In diesen Fällen wirkt das PEG auch als formgebendes Mittel und hilft, die Tablettenform zu erhalten. Speziell bei der Schmelzgranulierung mit anschließender Tablettenpressung kann das PEG zusätzlich als Trägersubstanz, Solubilisierungsmittel oder Absorptionsverstärker von Wirkstoffen dienen. Feste PEGs werden auch häufig in Überzügen von Filmtabletten als Trennmittel eingesetzt sowie speziell während des Herstellvorgangs als Formtrennmittel.

Bei all diesen Anwendungen ist die Korngrößenverteilung des Pulvers von entscheidender Bedeutung.

In vielen Fällen benötigt man PEG mit sehr unterschiedlichen Korngrößen, um die oben aufgeführten unterschiedlichen Funktionen gleichzeitig erfüllen zu können. Beispielsweise ist ein Feinanteil von PEG-Pulver bei der Schmelzgranulierung wichtig (Pharmazie 55 (12-2000) 919 - 924) während für die anschließende eigentliche Tablettierung grobe PEG-Körner günstiger sind.

In diesen Fällen müssen daher mehrere unterschiedliche PEG-Pulver mit ganz unterschiedlicher Korngrößenverteilung vor oder während der Verarbeitung miteinander gemischt werden. Das homogene Mischen von Feststoffen unterschiedlicher Korngrößenverteilung erfordert hohen Aufwand oder ist häufig gar nicht völlig homogen möglich.
Ist der Feinanteil mit Korngrößen unterhalb etwa 100 Mikrometer eines einzumischenden PEG-Pulvers zu hoch, droht Staubexplosionsgefahr, was zusätzlich aufwendige Maßnahmen wie elektrisch ableitfähige Packmittel und Anlagen oder Begrenzung der jeweils verarbeiteten Mengen erfordert.

Im Markt befindliche PEG-Pulver werden entweder durch Vermahlen von grober Ware oder Versprühen von geschmolzener Ware hergestellt. Beide Verfahren führen nur zu einer relativ eng verteilten monomodalen Korngrößenverteilung, was man an den im Markt angebotenen PEG-Pulvern wie beispielsweise Carbowax der Fa. Dow/UCC, Pluriol E der Fa. BASF oder Polyglykol der Fa. Clariant erkennen kann.

Es bestand daher die Aufgabe, ein PEG-Pulver herzustellen, das eine sehr breite Verteilung der Korngrößen bei gleichzeitigem streng limitiertem Fein- und Grobanteil oder bevorzugt eine bimodale Korngrößenverteilung zeigt.

Die Herstellung kann aus der heißen PEG-Schmelze durch übliche Verfahren zum Versprühen und Kühlen von Schmelzen, beispielsweise nach dem in EP 0 945 173 beschriebenen Verfahren, oder durch übliche Verfahren zum Vertropfen und Kühlen von Schmelzen mit vibrierenden Düsenlochplatten, beispielsweise in von den Firmen Brace GmbH, Alzenau, Deutschland, als Mikrokugelanlage oder Rieter Automatik GmbH, Großostheim, Deutschland, als Droppo-Anlage angebotenen Verfahren, erfolgen.

In all diesen Verfahren wird die PEG-Schmelze in Tröpfchen überführt, die dann zu Pulverpartikel verfestigt werden. Über die Tröpfchengröße wird die spätere Korngröße des Pulvers festgelegt. Die Tröpfchengröße ist einerseits vom Druck abhängig, mit der die Schmelze durch die tropfenbildende Düse gedrückt wird, und andererseits von der Düsengeometrie.
Die gewünschte bimodale Korngrößenverteilung kann erreicht werden, indem die PEG-Schmelze unter pulsierendem Druck durch die Düsenvorrichtung gedrückt wird, oder indem Düsen zweier unterschiedlicher Geometrien gleichzeitig nebeneinander verwendet werden. Im Fall des Verfahrens mit vibrierenden Düsenlochplatten kann auch eine ständige Variation der Vibrationsfrequenzen zur gewünschten bimodalen Korngrößenverteilung führen.
Die PEG-Schmelze wird typischerweise mit einer Temperatur zwischen 60 und 140°C, bevorzugt zwischen 70 und 120°C, besonders bevorzugt zwischen 80 und 110°C vorgelegt. Die Temperaturen der beheizten Düsen liegen ebenfalls in diesen Bereichen. Die Düsenlochdurchmesser betragen 0,05 bis 5 Millimeter, bevorzugt 0,1 bis 3 Millimeter, besonders bevorzugt 0,5 bis 2 Millimeter.
Der Druck, mit der die Schmelze durch die Düsenvorrichtung gedrückt wird, ist stark von der Viskosität abhängig, die wiederum sehr von der mittleren Kettenlänge, also von mittleren Molmasse des zu verfestigenden PEG sowie von der verwendeten Temperatur abhängt. Typischerweise wird mit einem Druck von 0,1 bis 20 bar, bevorzugt von 2 bis 15 bar, besonders bevorzugt von 5 bis 12 bar gearbeitet.
Zum Verfestigen der Tröpfchen zu Pulverteilchen können alle gängigen Kühlmittel wie beispielsweise Luft oder Cryogase wie Stickstoff oder Kohlendioxid verwendet werden.

Infolge ihrer bimodalen Korngrößenverteilung können erfindungsgemäße PEG-Pulver sehr unterschiedliche Funktionen erfüllen und sind daher universell in Tablettier- und Schmelzgranulierprozessen einsetzbar.

### Beispiel

Das nachfolgende Beispiel soll den Gegenstand der Erfindung näher erläutern, ohne ihn darauf einzuschränken.

Herstellung eines PEG-Pulvers mit bimodaler Korngrößenverteilung PEG mit einer mittleren Molmasse von 5500 wurde in einer herkömmlichen Sprühkühlanlage als Schmelze bei 120°C und einem Druck von 10 bar durch Düsen von 0,9 mm und 2,0 mm Durchmesser gedrückt und abgekühlt. Das dabei erhaltene PEG-Pulver hatte eine Korngrößenverteilung von 9 Gew.-% Teilchen kleiner 100 Mikrometer, 32 Gew.-% Teilchen zwischen 100 und 200 Mikrometer, 14 Gew.-% Teilchen zwischen 200 und 300 Mikrometer, 41 Gew.-% Teilchen zwischen 300 und 800 Mikrometer und 4 Gew.-% Teilchen größer als 800 Mikrometer.

## Patentansprüche

1. Festes Polyethylenglykol mit mittlerer Molmasse von 1500 bis 40000 in Pulverform mit einer bimodalen Korngrößenverteilung, mit 0 bis 15 Gew.-% Teilchen kleiner 100 Mikrometer, 10 bis 90 Gew.-% Teilchen zwischen 100 und 200 Mikrometer, 0 bis 25 Gew.-% Teilchen zwischen 200 und 300 Mikrometer, 10 bis 90 Gew.-% Teilchen zwischen 300 und 1000 Mikrometer und 0 bis 10 Gew.-% Teilchen größer als 1000 Mikrometer.

2. Festes Polyethylenglykol mit mittlerer Molmasse von 1500 bis 40000 in Pulverform mit einer bimodalen Korngrößenverteilung, mit 0 bis 10 Gew.-% Teilchen kleiner 100 Mikrometer, 20 bis 80 Gew.-% Teilchen zwischen 100 und 200 Mikrometer, 0 bis 15 Gew.-% Teilchen zwischen 200 und 300 Mikrometer, 20 bis 80 Gew.-% Teilchen zwischen 300 und 800 Mikrometer und 0 bis 10 Gew.-% Teilchen größer als 800 Mikrometer.

3. Festes Polyethylenglykol nach Anspruch 1 oder 2 mit mittlerer Molmasse von 3000 bis 20000.

4. Festes Polyethylenglykol nach Anspruch 1 oder 2 mit mittlerer Molmasse von 3350 bis 8000.

5. Herstellung eines festen Polyethylenglykols nach einem der Ansprüche 1 bis 4 durch Versprühen des Polyethylenglykols als Schmelze bei erhöhter Temperatur durch zwei verschiedene Düsen gleichzeitig.

6. Herstellung eines festen Polyethylenglykols nach einem der Ansprüche 1 bis 4 durch Versprühen des Polyethylenglykols als Schmelze bei erhöhter Temperatur unter pulsierendem Druck.

7. Verwendung eines festen Polyethylenglykols nach einem der Ansprüche 1 bis 6 als Hilfsmittel bei der Tablettenherstellung.

8. Verwendung eines festen Polyethylenglykols nach einem der Ansprüche 1 bis 6 als Hilfsmittel bei der Schmelzgranulierung.
